# EUROPEAN PATENT APPLICATION

(11) **EP 2 071 775 A1**
(43) Date of publication of application: **17.06.2009**
(21) Application number: 07254858.9
(22) Date of filing: 13.12.2007
(51) Int. Cl.: H04L 12/56

(54) **Data access**

(71) Applicant: British Telecommunications public limited company, 81 Newgate Street EC1A 7AJ (GB)
(72) Inventor: The designation of the inventor has not yet been filed
(74) Representative: Lidbetter, Timothy Guy Edwin

(57) **Abstract**

A wireless terminal 1 capable of handling voice and data traffic is configured to use an internet connection 3 when available and a connection to a cellular network 7 otherwise. To allow handover between the systems, voice calls using the VoIP protocol are tunnelled to a bridging point 74 between the internet 3 and cellular network 7. However, to avoid the need for data to be routed by way of the cellular network and then back into the internet, the tunnelled connection between the hub and the mobile access bridge 74 is replaced with with two separate tunnels 14, 47 respectively connecting the user 1 and MAB 74 with an intermediate breakout point, which in Figure 7 is a VoIP network controller 4. From this breakout point a third connection 46 is made to the internet, for carrying non-voice data traffic by way of a network access control proxy 5.

This arrangement provides the ability to transfer not only VoiP traffic but all other application traffic through the first tunnelled connection 14 to the network controller 4, from where voice traffic can be identified and forwarded over the second tunnelled connection 47, whilst other, data, traffic can be routed to the internet 6 over the third link 46. This configuration allows high speed data applications to be carried over the link 14 concurrently with VoIP traffic. This arrangement allows a single wifi connection to be used between the handset 1, the access point 2, and the broadband connection 3 to the network controller 4, using the same single IPSec tunnel 14 to provide the ability to have a voice call in progress via a handsfree device, whilst receiving a streaming data application such as a remote camera transmission

Alternative breakout points are discussed in the specification.

## Description

This invention relates to the accession of data from a terminal over a wireless connection. More specifically, it relates to connections made using dual-mode handsets of the type that can be connected both by way of a wireless access point (using the 802.11 "wifi" standard, and in particular the UMA (Universal Mobility Access) connectivity, which is part of the 3rd Generation Partnership Project (3GPP) standard, when such a connection is available, or otherwise by a cellular network.

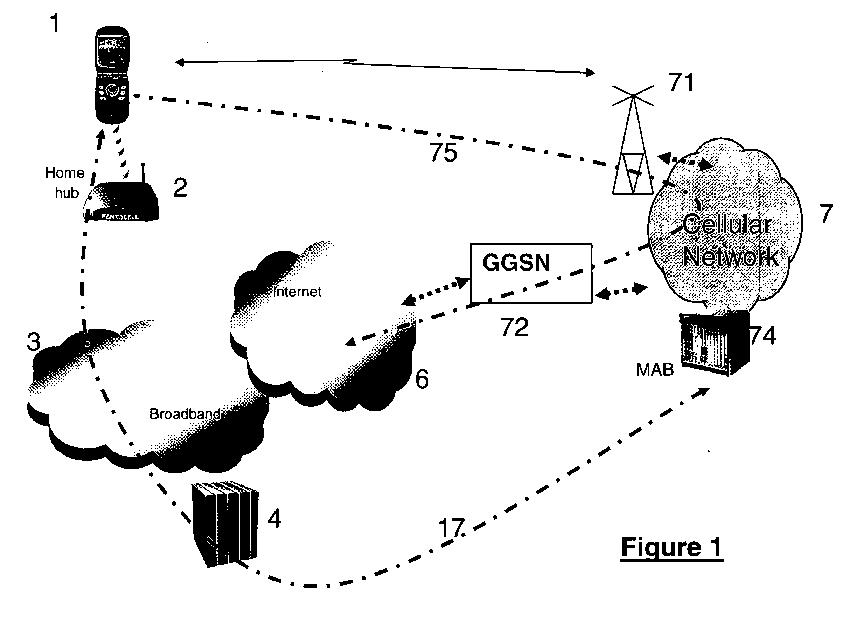

In such arrangements, as shown in Figure 1, the handset 1 operates as a normal cellular handset connected through a base station 71 of the cellular network 7, unless a "wifi" base station 2, (also known as a "hub") is available, in which case voice calls are connected through the hub 2 using "Voice over Internet Protocol" (VoIP). In this arrangement a tunnelled data connection 17, hereinafter referred to as a "tunnel" 17 is established between the handset 1 and a network controller known as a mobility access bridge (MAB) 74 acting as an interface with the cellular network 7. Typically the end-to-end security of the tunnel is provided by "IPSec" Internet protocol security. At the mobility access bridge 74 the VoIP calls are converted into coding that can be handled by the telephone network 7. Such calls are therefore routed through the wifi hub 2, a broadband internet connection 3, and a VoIP network controller 4 to the mobility access bridge (MAB) 74. Once the tunnel 17 is established, the digitised call is merely relayed through these elements 2, 3, 4 without any processing except for routing. The MAB 74 acts as a "quasi-base station" of the cellular network 7, allowing calls to be handed off between the mobility access bridge 74 and the ordinary base stations 70, 71 of the network as the mobile handset 1 moves in and out of range of the hub 2.

Existing systems of this type can handle Voice over Internet calls, but the handsets are configured so that data is always carried over the cellular network 7, using the GPRS (GSM packet radio service) system, to reach the internet 6 through a gateway GPRS support node (GGSN) 72, a routing represented by reference 75 (Figure 1).

It would be advantageous to connect the handset 1 to the internet 6 through the wifi hub 2 when the handset 1 has a connection to it, as it avoids the use of a second wireless connection (through the cellular base station 71), and because broadband internet speeds are much faster than the GPRS service.

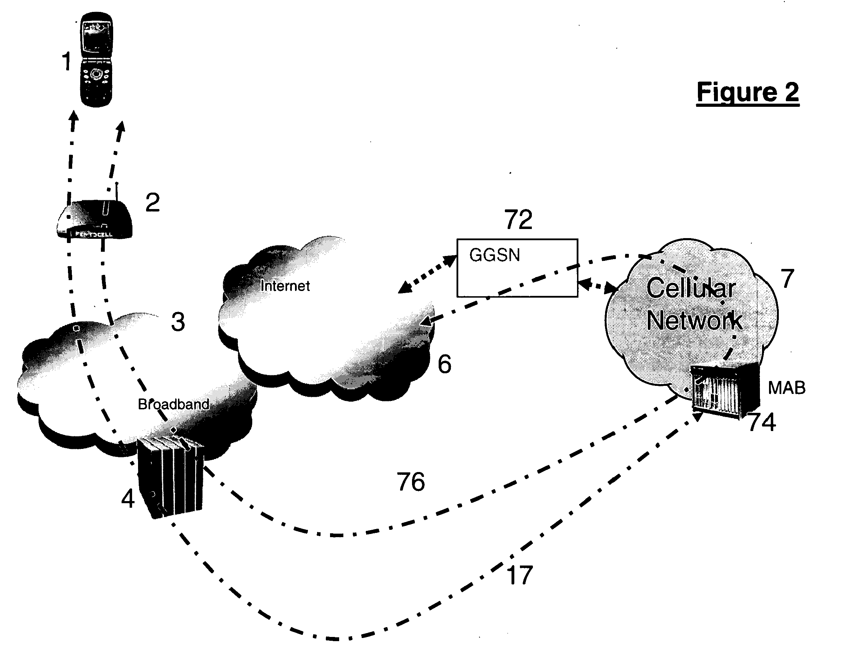

The first of these disadvantages could be ameliorated by arranging for GPRS sessions initiated at the handset to be routed by way of the existing tunnelled connection 17 used for VoIP calls, as shown in Figure 2, but this does not improve the speed. Moreover, it requires the data packets to take a route 76 that passes through the Internet twice (represented at 3, 6), passing through the mobility access bridge 74 and cellular network 7 in between. This is clearly cumbersome. Moreover, as both connections 17, 76 use the same network identity with the cellular network 7. In many cases this may preclude the ability to use both services simultaneously.

The present invention seeks to improve on this by arranging that the handset 1 can transmit data to the hub 2 using the standard Internet Protocol (IP). This requires a new process for handling the data sessions and VoIP sessions, so that data sessions can operate entirely independently of the telephone network 7.

According to the invention, there is provided a method of connecting a communications terminal to a base station such that it may run digital voice applications through a tunnelled connection by way of the base station to a switched telephone network concurrently with data applications to a route other than the switched telephone network. In the embodiments to be described, the connection between the terminal and the base station is a wireless connection using the IEEE 802.11 "Wi fi" standard), but other wireless or fixed connections, such as "Ethernet" are possible.

In one embodiment a plurality of separate tunnelled data connections can be established from the terminal through the base station: each of the tunnelled data connections carries either a digital voice application or non-voice data traffic. However, this configuration has bandwidth constraints which can be avoided in the preferred embodiments, in which traffic for the switched telephone network and traffic for other routes are carried over a single tunnelled data connection between the terminal and a network controller, and wherein the network controller intercepts the tunnelled traffic and directs data and voice traffic onto respective separate routings. Data traffic may be directed to a proxy server controlling and monitoring access to a data network.

This configuration allows a high speed data path to replace the GPRS data channel (75 in Figure 1), and provides a virtual private network path to the internet, or to an access control system ("walled garden" application) allowing access from the terminal to internet applications to be controlled.

According to another aspect, there is provided a communications terminal capable of supporting concurrent digital voice traffic and non-voice data traffic, comprising means to establish one or more tunnelled data connections to respective network controllers, and means to establish separate routings over the one or more tunnelled data connections for each class of traffic. In the preferred embodiment, the terminal has means to create a single tunnelled data connection to carry all classes of traffic, and means to create routing information in a data overhead to control the onward routing of the traffic at the remote end of the tunnelled data connection.

The terminal may be arranged to use a wireless connection to a base station, and may have a capability to communicate with base stations of more than one type of wireless connection according to availability, for example using a GPRS cellular connection when no broadband internet wireless connection is available.

Associated with the terminal is a data network controller having means to terminate a tunnelled data connection carrying a data stream from a terminal, means to extract data from the stream received over the tunnelled data connection, characterised by means to identify the intended destinations of data in the stream in accordance with the extracted data, and means to forward the data to the intended destinations so identified. Preferably the network controller is capable of handling two-way traffic, so that it also comprises means for receiving data from a plurality of sources, characterised by means for identifying data from each source that is destined for an individual destination, and combining such data into a single data stream for transmission to the destination over a tunnelled data connection. However, the merging and combining functions may be carried out by separate functional elements, and in certain special cases where only one direction of traffic is required, one of the merging or combining function may operate without a requirement for the other.

In the preferred embodiment, the data network controller has means to terminate at least two tunnelled data connections, connected respectively to a user terminal and a further network controller providing access to a switched network, the data network controller having means to identify the intended destination of traffic received over one of the tunnelled data connections and routing it over the or each other tunnelled data connection as appropriate. The preferred embodiment provides means for extracting any traffic received from a user terminal and not intended for the switched network, and routing any such extracted traffic to a network access monitoring and control system.

Embodiments of the invention will now be discussed, with reference to the drawings, in which:
Figure 1 illustrates an existing configuration, in which data is carried over the cellular system using a packet data service such as GPRS.
Figure 2 illustrates the configuration previously discussed in which data is carried over a wireless data link and the cellular system.
Figure 3 illustrates the functional elements of a terminal according to the invention.
Figure 4 illustrates a first embodiment of the invention in which VoIP and data traffic are separated at the user terminal..
Figure 5 illustrates the functional elements of a network controller used in further embodiments of the invenetion.
Figure 6 illustrates an embodiment in which VoIP and data traffic are separated at the mobile access bridge.
Figure 7 illustrates an embodiment in which VoIP and data traffic are separated at the VoIP network controller.

Although these embodiments are described with reference to the UMA standard, the invention is applicable to other data transfer protocols such as SIP (Session Initiation Protocol)

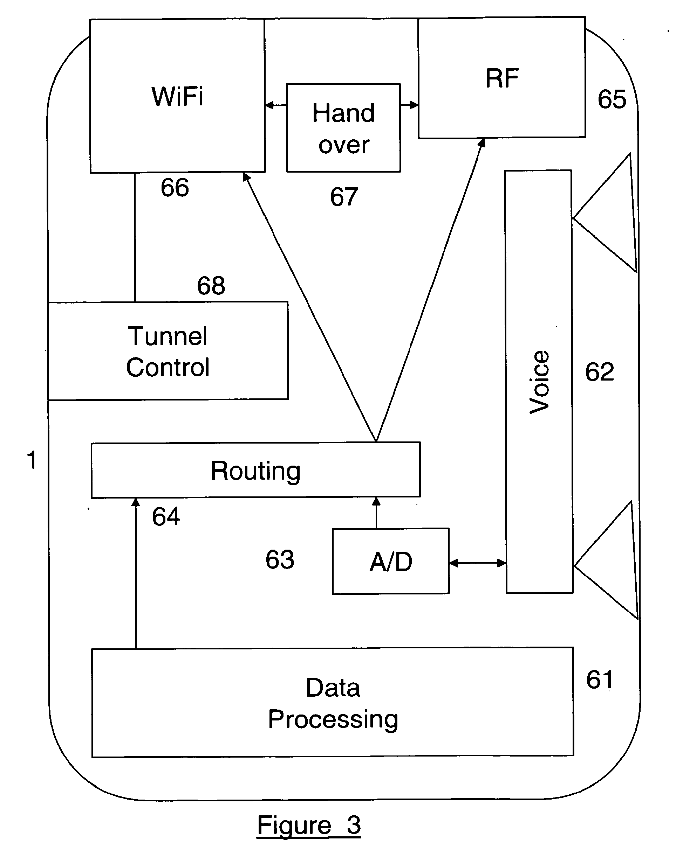

Figure 3 is a schematic diagram of a terminal 1 according to the invention, illustrating the functional elements which co-operate to perform the invention. The termina 1 has a data processing capability 61 and a voice capability 62, the latter associated with an analogue to digital converter 63. The routing of voice calls and data sessions to the intended destination is controlled by an addressing function 64, which applies the appropriate packetisation headers or other digital addressing to route traffic either to an RF output 65 for connection to a cellular base station 71 (Figure 1) or to a wifi output 66 for connection to a wifi hub 2 (Figures 1, 4, 6 and 7). The routeing function 64 also dteremines the protocol under which voice traffic is coded, e.g. GSM (cellular) or VoIP (voice over internet protocol). Switching between these outputs 65, 66 is under the control of a handover function 67. Incoming data voice traffic is also handled by the RF and Wifi interfaces 65, 66, being passed by the router 64 to the data processing and voice functions 61, 62 as appropriate.

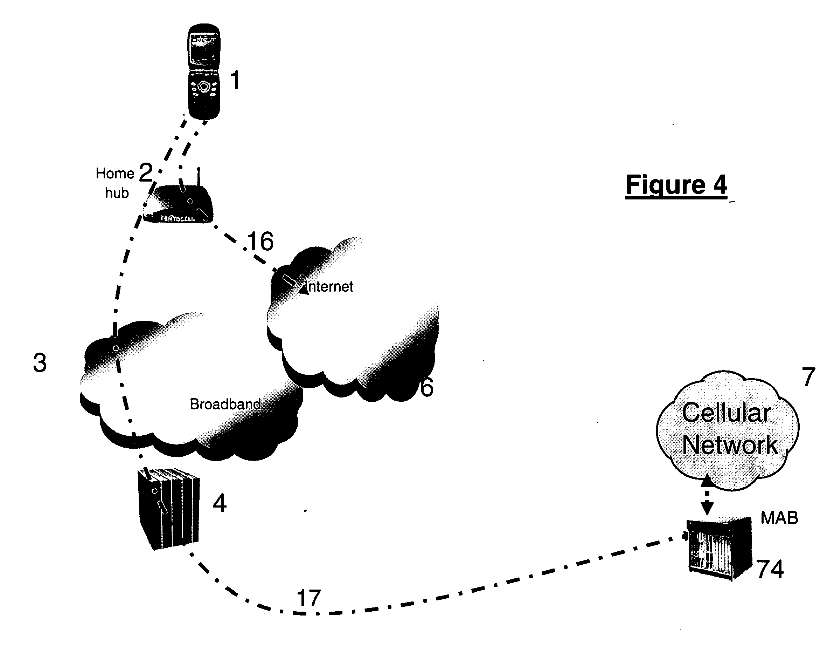

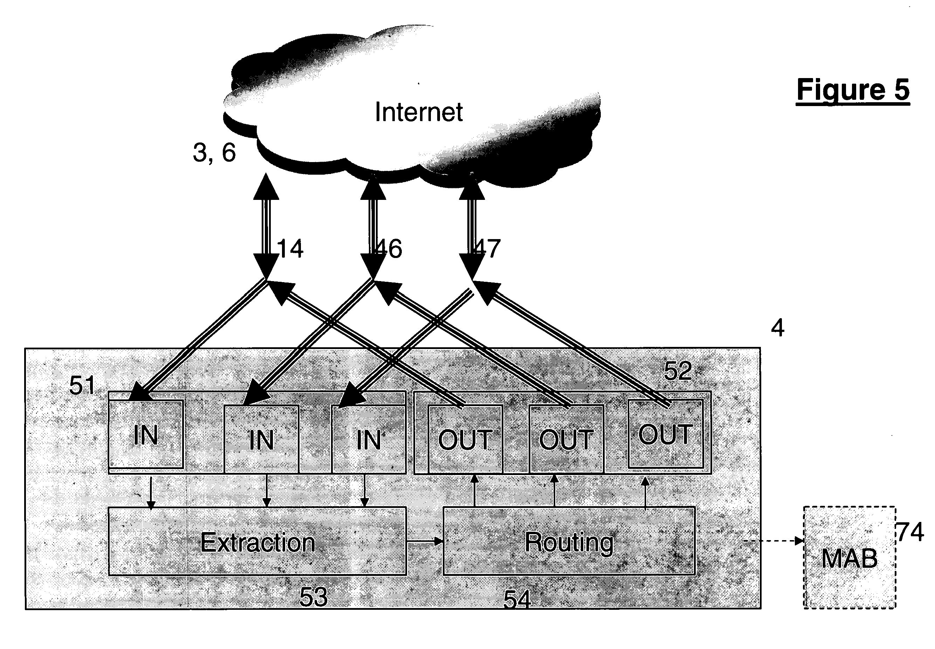

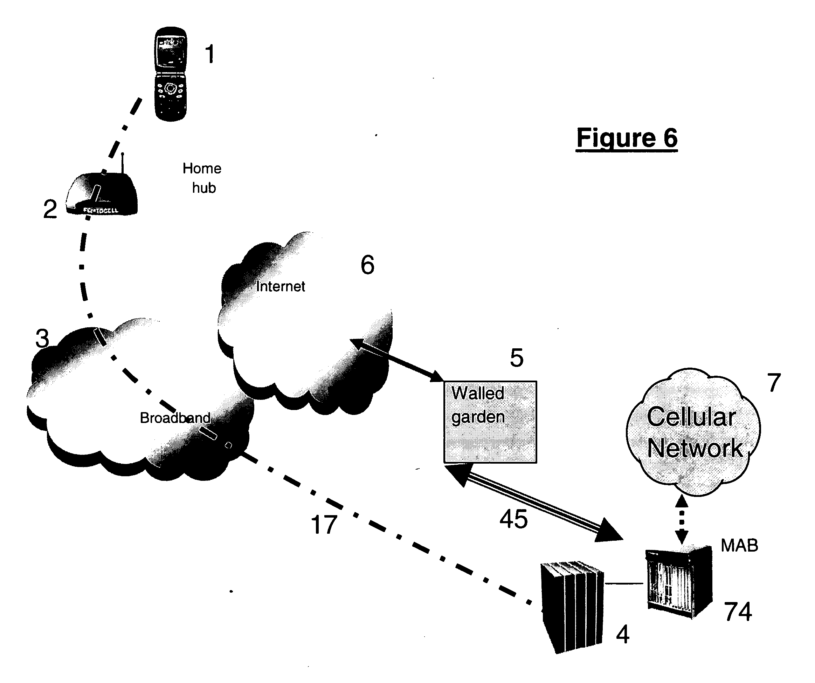

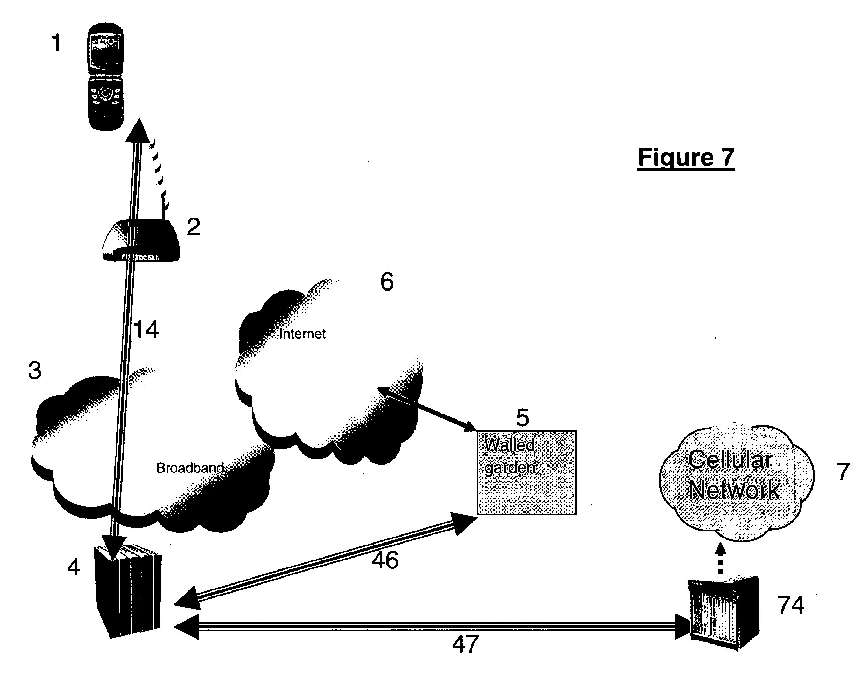

Associated with the WiFi interface 66 is a tunnel control function which establishes data tunnels across the data connection 3 from the wifi interface 66 to one or more designated termination points. In the embodiment of Figure 4, multiple tunnelled connections can be set up simultaneously: one such tunnel 17 carries voice traffic in VoIP format to a mobile access bridge 74, whilst data is carried on one or more other tunnels 16. In other embodiments (Figure 6 and 7) the terminal 1 establishes a single tunnel 14 (Figure 6), 17 (Figure 7) to a network controller 74 (Figure 4), 4 (Figure 5), carrying both data and VoIP traffic. The header information applied by the router 64 allows the remote end 4, 74 to identify the onward routing in these embodiments.

In the embodiment of Figure 4 the terminal 1 operates, when connected to a hub unit 2, as a normal wireless computer terminal, accessing the internet 6 directly through a connection 16 through the hub 2 without using the network controller 4. This uses the existing wifi capability of the terminal 1, provided to support the VoIP service. This arrangement requires no modifications to the existing VoIP network. However, current VoIP handset security solutions provide for all WiFi traffic to use a UMA tunnel 17 (Figure 1). This embodiment breaks that model, so the handset needs to separate IP data traffic from VoIP traffic, so that the handset can distinguish VoIP traffic from IP traffic and route it accordingly.

This arrangement requires separate "tunnel" routes 16, 17, for data and VoIP respectively (Figure 4), but there would be capacity problems as both tunnels would have to have sufficient peak bandwidth allocation.

For the terminal to be capable of receiving incoming calls, the wifi service must always be connected. The resulting uncontrolled access to the internet provided by this embodiment may be undesirable. Applications such as parental control could be implemented on the handset, but this would require regular over-the-air upgrades, or the handset could be locked-down to route all traffic to a network proxy.

If the capability is to be maintained to handoff voice calls between the wifi connection 17 and the cellular system 7, it is still be necessary to route voice (VoIP) connections to the network controller 4, and thus to the network 7 by way of the mobility access bridge 74, so the handset 1 (or the hub 2) would need to distinguish between VoIP and data sessions in order to achieve this split. However, separating VoIP traffic from data sessions at the handset 1 would require two separate wifi connections, restricting the available capacity on both. Moreover, such an arrangement requires separate authentication credentials for the two services, and the two IPSec tunnels are likely to have a processing impact on handsets.

The embodiment of Figure 4 requires no substantial modification to the network. However, the embodiments of Figure 6 and 7, to be described shortly, require modifications to a data network controller 4, 74 as will now be described with reference to Figure 5.

As shown in Figure 5, the data controller 4 has means 51 to terminate a number of tunnelled data connections 14, 46, 47 (see Figure 7) each carrying a data stream received over the Internet 3, 6 from a co-operating device (1, 5, 74 respectively). In the embodiment of Figure 6 tunnelled connections 17, 45 are similarly terminated at the data controller 4 which, in that embodiment, is located with the mobile access bridge 74 (indicated by dashed lines in Figure 5). The tunnel terminations 51 pass traffic to an address extraction function 53. The extracted address data is used by a routing function 54 to identify the forward routing of the traffic received. For each individual destination, data received from multiple sources is combined by the routing function 54 into a single data stream for transmission to the destination over a dedicated tunnelled data connection 14, 46, 47 (17, 45), or to a co-located function such as the mobile access bridge 74.

The routing function 54 is configured such that data may only be exchanged with a limited number of terminations, such as individual registered subscribers (tunnel 17), a mobile access bridge 74 (tunnel 46) for VoIP traffic, and a network access monitoring and control system 5 (tunnel 47) for all other traffic.

In the embodiment of Figure 6, the IPSec tunnel 17 is re-used, and Internet traffic and VoIP traffic are separated at a outer co-located with the mobility access bridge 74. This requires the mobility access bridge 74 to be capable of distinguishing voice traffic, which is to be routed to the cellular network 7, and data traffic which can be routed to the Internet 6. This configuration readily allows all Internet access to be routed by way of a proxy 5 (sometimes known as a "walled garden") application (tunnel 45). Such applications monitor internet activity by comparing access requests with lists of permitted or forbidden network addresses, and permit or refuse access to predetermined internet addresses by the users, for example for virus protection, parental control and other safeguarding functions.

In the preferred arrangement, shown in Figure 7, the separation of voice and data traffic takes place at the VoIP network controller 4. This replaces the tunnelled connection 17 between the hub and the mobile access bridge 74 with two separate tunnels 14, 47 respectively connecting the hub 2 and MAB 74 with the VoIP network controller 4. A third connection 46 runs from the network controller 4 to the internet 6. (Again a proxy 5 is used, as in Figure 6). This arrangement provides the ability to transfer not only VoiP traffic but all other application traffic through the first tunnelled connection 14 to the network controller 4, from where voice traffic can be identified and forwarded over the second tunnelled connection 47, whilst other, data, traffic can be routed to the internet 6 over a third link 46. This configuration allows high speed data applications to be carried over the link 14 concurrently with VoIP traffic. Connection to the internet 6 can be provided without the need to reconfigure the mobility access bridge 74, as selective routing of VoIP and data traffic is now handled by the VoIP network controller 4.

This arrangement allows a single wifi connection to be used between the handset 1, the access point 2, and the broadband connection 3 to the network controller 4, using the same single IPSEC tunnel 14 to provide the ability to have a voice call in progress via a handsfree device, whilst receiving a streaming data application such as a remote camera transmission.

These applications will be able to transfer data concurrently with frames intermixed within the single secure tunnel. The user may select how such data is prioritised, for example to maintain VoIP voice quality, or to maintain an adequate data streaming rate. Because the traffic 46, 47 is separated at the network controller, individual quality of service parameters for the separate voice and data paths may be set.

This embodiment requires relatively little modification to the handset. The handset 1 would be conformant with the UMA (Universal Mobility Access) standard, and in addition would be capable of data transfer between applications to be carried out at the same time as a voice call is being made. This can be achieved by the use of a GSM medium for the voice call and GPRS medium for the data transfer.

The handset 1 may be configured to determine whether any given service is to be routed by the network controller 4 or using the conventional GPRS routing 75 (Figure 1) uses GPRS and which use Native IP. This configuration may be user-controlled or hardcoded on the handset.

When within range of the wifi network, i.e. through a hub 2, all data will be transferable over the broadband connection 3, with the capability to switch to other media e.g. GPRS 75 (Figure 1) for data transfer when off-net

In the prior art configuration of Figure 1 the tunnelled connection 17 interconnecting the user 1 and mobile access bridge 74, used for VoIP traffic, is established by the network controller 4 when a call is first connected, but plays no active part in the transmission of the data. In the present embodiment of Figure 7, the Network Controller 4 sets up the three tunnels 14, 46, 47. As the termination of the single secure IPSec tunnel 14, it extracts the data stream. The extracted VoIP data stream 47 is then passed through to the mobile access bridge 74 which provides the interface with the cellular network 7. The network controller 4 also extracts and recovers the data passed by other applications and passes this to a gateway 5 giving access to the Internet 6 and thus to other (non-voice) applications 46.

## Claims

1. A method of connecting a communications terminal to a base station such that it may run digital voice applications through a tunnelled connection by way of the base station to a switched telephone network concurrently with data applications to a route other than the switched telephone network.

2. A method according to claim 1, wherein the connection between the terminal and the base station is a wireless connection.

3. A method according to claim 1 or claim 2, wherein a plurality of separate tunnelled data connections are established from the terminal through the base station, each of the tunnelled data connections carrying either a digital voice application or non-voice data traffic.

4. A method according to claim 1 or claim 2, wherein traffic for the switched telephone network and traffic for other routes are carried over a single tunnelled data connection between the terminal and a network controller, and wherein the network controller intercepts the tunnelled traffic and directs data and voice traffic onto respective separate routings.

5. A method according to any preceding claim wherein data traffic is directed to a proxy server controlling and monitoring access to a data network.

6. A communications terminal capable of supporting concurrent digital voice traffic and non-voice data traffic, comprising means to establish one or more tunnelled data connections to respective network controllers, and means to establish separate routings over the one or more tunnelled data connections for each class of traffic.

7. A communications terminal according to claim 6, having means to establish a plurality of separate tunnelled data connections from the terminal, each of the tunnelled data connections carrying either a digital voice application or non-voice data traffic

8. A terminal according to claim 6, comprising means to create a single tunnelled data connection to carry all classes of traffic, and means to create routing information in a data overhead to control the onward routing of the traffic at the remote end of the tunnelled data connection.

9. A terminal according to claim 6, 7 or 8, comprising means to communicate with a base station over a wireless connection.

10. A terminal according to claim 9, having means to communicate with base stations of more than one type of wireless connection according to availability.

11. A data network controller having means to terminate a tunnelled data connection carrying a data stream from a terminal, means to extract data from the stream received over the tunnelled data connection, **characterised by** means to identify the intended destinations of data in the stream in accordance with the extracted data, and means to forward the data to the intended destinations so identified.

12. A data network controller having means to terminate a tunnelled data connection carrying a data stream to a terminal, having means for receiving data from a plurality of sources, **characterised by** means for identifying data from each source that is destined for an individual destination, and combining such data into a single data stream for transmission to the destination over a tunnelled data connection.

13. A data network controller having means to terminate a tunnelled data connection carrying data streams to and from a terminal, having the characterising features of claims 10 and 11

14. A data network controller according to claim 11, 12, or 13, having means to terminate at least two tunnelled data connections, connected respectively to a user terminal and a further network controller providing access to a switched network, the data network controller having means to identify the intended destination of traffic received over one of the tunnelled data connections and routing it over the or each other tunnelled data connection as appropriate.

15. A data network controller according to claim 14, having means for extracting any traffic received from a user terminal and not intended for the switched network, and routing any such extracted traffic to a network access monitoring and control system.
